# FASCICULE DE BREVET EUROPEEN

(11) **EP 2 589 100 B1**
(45) Date de publication et mention de la délivrance du brevet: **29.10.2014**
(21) Numéro de dépôt: 11723485.6
(22) Date de dépôt: 07.06.2011
(51) Int. Cl.: H01M 8/06, H01M 8/00, H01M 8/04, B60L 11/18, C25B 1/04, C25B 1/14, C25B 1/26, C25B 9/00, C25B 9/18

(54) **Ensemble de stations service et de véhicules, pour la production de et l'alimentation en hydrogène et oxygène desdits véhicules**
Kombination aus Wartungsstationen und Fahrzeugen für die Herstellung von Wasserstoff und Sauerstoff und die Versorgung der Fahrzeuge damit
Combination of service stations and vehicles for the production of hydrogen and oxygen and their supply to said vehicles

(30) Priorité: 29.06.2010 FR 1055215
(43) Date de publication de la demande: 08.05.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: DELFINO, Antonio, F-63040 Clermont-Ferrand Cedex 9 (FR)
(74) Mandataire: Roussy, Delphine
(86) Numéro de dépôt international: PCT/EP2011/059379
(87) Numéro de publication internationale: WO 2012/000744

(56) Documents cités:
- US-A- 4 797 186
- US-A- 5 372 617
- US-A- 5 419 818

## Description

### DOMAINE TECHNIQUE DE L'INVENTION

La présente invention concerne un système de production et d'alimentation d'hydrogène et d'oxygène pour véhicule électrique à pile à combustible et elle concerne également une station service correspondante, partie d'un système de production et d'alimentation d'hydrogène et d'oxygène.

### ETAT DE LA TECHNIQUE ANTERIEURE

Les véhicules utilisant une pile à combustible fonctionnant à l'hydrogène et à l'oxygène pur présentent plusieurs avantages par rapport à une pile à combustible fonctionnant à l'oxygène contenu dans l'air. Parmi ces avantages, on retrouve notamment les particularités suivantes : la densité de puissance est plus élevée (compacité), le système de gestion des gaz de la pile à combustible est fortement simplifié, il n'est pas nécessaire d'humidifier les gaz entrant dans la pile à combustible, le coût est inférieur pour une puissance donnée, le rendement du système est plus élevé, le compresseur d'air est supprimé, aucun gaz polluant n'est introduit dans la pile à combustible par l'air.

Certains inconvénients importants subsistent malgré tout. D'une part, le poids embarqué du réservoir d'oxygène sous haute pression est relativement élevé, d'autre part, l'utilisation de gaz sous pression présente certains risques. La pression doit être limitée car le gaz devient extrêmement dangereux lorsque la pression dépasse 200 bars. Lors d'une détente adiabatique, beaucoup de matériaux s'enflamment spontanément au contact de l'oxygène.

Pour pallier ces différents inconvénients, l'invention prévoit différents moyens techniques.

### EXPOSE DE L'INVENTION

Tout d'abord, un premier but de l'invention consiste à prévoir un système de production et d'alimentation pour véhicule électrique qui soit écologique et sécuritaire ;

Un autre but consiste à prévoir une station service permettant d'alimenter les véhicules de façon optimale.

Pour ce faire, l'invention prévoit un ensemble de stations service et de véhicules, pour la production de et l'alimentation en hydrogène et oxygène desdits véhicules électriques, l'ensemble comportant une pluralité de stations service comprenant chacune au moins un électrolyseur au NaCl, prévues pour fournir à des véhicules susceptibles d'être reliés aux stations une réserve d'hydrogène et une réserve de NaClO3, une pluralité de véhicules connectables aux dites stations pour recevoir les dites réserves d'hydrogène et de NaClO3 pour stockage dans les véhicules dans des réservoirs distincts, les véhicules comportant des moyens pour transformer l'hydrogène et le NaClO3 en énergie électrique pour alimenter au moins un équipement électrique du véhicule.

Les moyens pour transformer l'hydrogène et le chlorate de sodium (NaClO3) en énergie électrique comportent de préférence une pile à combustible alimentée en oxygène pur et en hydrogène. Chaque véhicule comprend avantageusement un réacteur de décomposition de chlorate de sodium, qui permet d'embarquer dans un véhicule (sous-marin, avion, voiture, moto, etc) du chlorate de sodium afin de produire in situ de l'oxygène pour l'utiliser dans la pile à combustible et ainsi éviter les inconvénients liés au stockage sous haute pression et à la sécurité.

Ainsi, l'invention offre une solution pratique pour la fabrication de l'oxygène autrement que par l'électrolyse de l'eau.

On remarque que les produits de décomposition du chlorate de sodium (NaClO3) sont du chlorure de sodium ou sel (NaCl) et de l'oxygène. Le sel peu éventuellement être à nouveau utilisé pour recréer du chlorate de sodium. L'oxygène est utilisé pour alimenter la pile à combustible. C'est un carburant propre, procurant un rendement élevé, contribuant d'une part à générer une quantité d'énergie importante, et d'autre part à assurer un respect de l'environnement dans lequel évolue le véhicule.

Selon un autre mode de réalisation avantageux de l'invention, les stations service sont reliées à des sources d'alimentation électrique permettant de fournir l'énergie requise pour générer une réaction d'électrolyse.

Un véhicule, qui peut être utilisé dans l'ensemble de la revendication 1, comprend :
- une pile à combustible ;
- une alimentation de la pile à combustible à base d'hydrogène et d'oxygène fournis par un système d'alimentation d'hydrogène et un système d'alimentation d'oxygène embarqués ;
- dans lequel le système d'alimentation en hydrogène comporte un réservoir à sensiblement basse pression pour stockage du gaz à l'aide d'hydrures métalliques, ledit réservoir étant en communication fluidique avec la pile à combustible pour alimenter celle-ci en hydrogène;
- et dans lequel le système d'alimentation en oxygène comporte un réservoir de NaClO3, un réacteur de décomposition du NaClO3 en communication fluidique avec le réservoir de NaClO3 et relié à la pile à combustible pour alimenter celle-ci en oxygène après décomposition du NaClO3.

De manière avantageuse, les réservoirs de NaClO3 et d'hydrogène comportent chacun des conduits de remplissage, connectables à une source externe pour remplissage des réservoirs.

Le système d'alimentation en oxygène est avantageusement prévu de façon à pouvoir fournir le NaClO3 sous forme sensiblement solide au réacteur de décomposition.

Selon une variante avantageuse, le NaClO3 est fourni au réacteur par un système d'alimentation mécanique, comme par exemple par une vis sans fin, ou par gravité.

De préférence, ladite station service comprend:
- au moins un électrolyseur au NaCl, pour produire de l'hydrogène et du NaClO3 ;
- une alimentation en eau, pour la réaction d'électrolyse ;
- une alimentation en NaCl pour la réaction d'électrolyse ;
- une alimentation en énergie électrique, pour la réaction d'électrolyse ;
- une sortie de NaClO3 et une sortie de H2, issus de la réaction d'électrolyse, pour alimenter un véhicule connecté à ladite station service.

De manière avantageuse, une telle station service s'intègre dans un système précédemment décrit et comprend par ailleurs des réservoirs de stockage intermédiaires pour le stockage d'hydrogène et de NaClO3 avant remplissage des réservoirs des véhicules.

### DESCRIPTION DES FIGURES

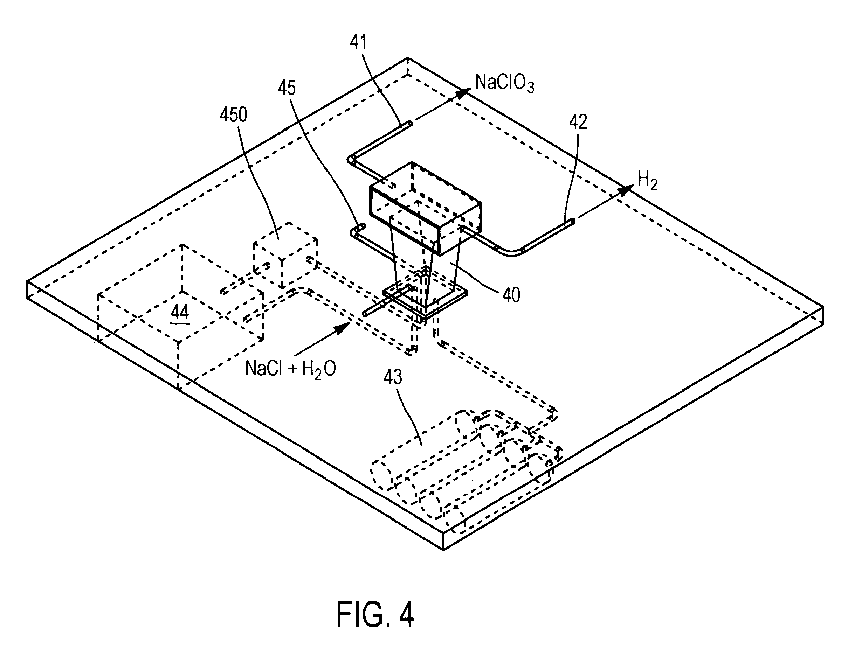

Tous les détails de réalisation sont donnés dans la description qui suit, complétée par les figures 1 à 4, présentées uniquement à des fins d'exemples non limitatifs, et dans lesquelles:
- la figure 1 représente de façon schématique un véhicule à motorisation électrique avec réservoir d'hydrogène à basse pression;
- la figure 2 montre le même véhicule en relation avec une station service ;
- la figure 3 montre un exemple de moyen utilisé pour permettre d'acheminer le NaClO3, dans cet exemple, une vis sans fin ;
- la figure 4 présente un exemple de station service pourvue de réservoirs de stockage intermédiaires.

### DESCRIPTION DETAILLEE DE L'INVENTION

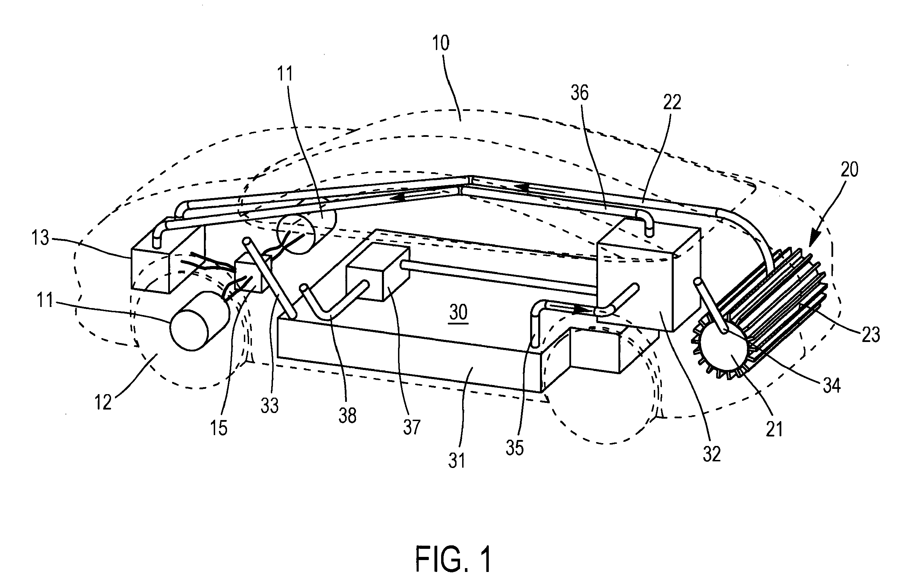

La figure 1 montre un exemple de véhicule 10 dont les moyens de propulsion, dans cet exemple des moteurs électriques 11 intégrés au niveau des roues 12, sont alimentés au moyen d'une pile à combustible 13. La pile à combustible fonctionne de façon classique, à base d'hydrogène et d'oxygène. La pile permet ainsi de générer du courant continu, envoyé via un convertisseur DC/DC 15 aux deux moteurs, prévus dans les roues avant du véhicule illustré. Le convertisseur DC/DC permet d'adapter la tension fournie par la pile à celle requise par les moteurs. Par exemple, pour une pile fournissant un voltage de 90 à 150 Volts, le convertisseur rehausse la tension par exemple à des valeurs pouvant se situer entre 250 et 300 Volts. Selon d'autres exemples de réalisation, on prévoit les moteurs intégrés au niveau des roues arrière du véhicule, ou encore un moteurs unique, couplé à des moyens de transmission de type connu.

L'hydrogène fourni à la pile 13 provient avantageusement d'un système d'alimentation en hydrogène 20 comportant un réservoir d'hydrogène 21 à sensiblement basse pression permettant le stockage au moyen d'hydrures métalliques. Ce mode de stockage avantageux permet d'optimiser la quantité de gaz, permettant par exemple de pouvoir stocker une importante quantité d'hydrogène à une pression relativement faible se situant entre 3 et 15 bars. Le système de stockage à hydrure métalliques est décrit plus en détails un peu plus loin dans la description.

Une conduite d'hydrogène 22 permet de relier le réservoir d'hydrogène 21 à la pile à combustible 13.

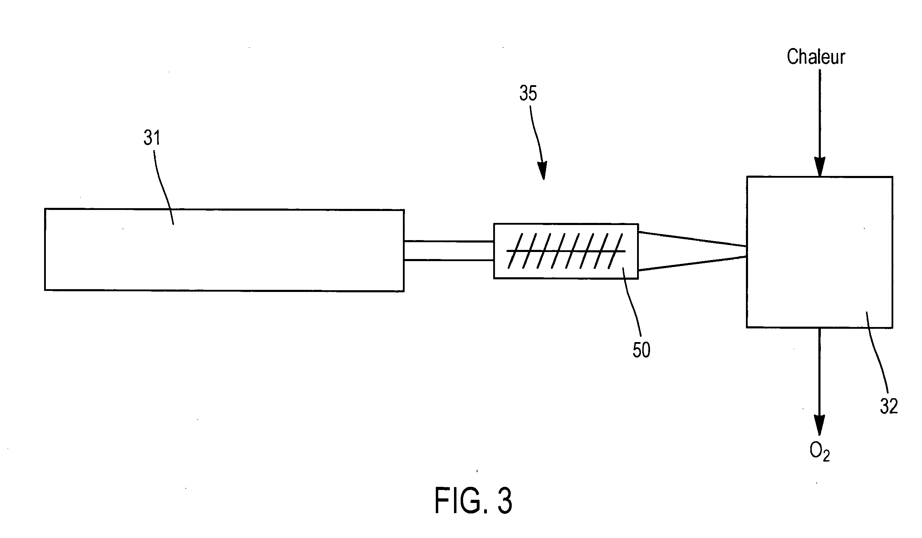

L'oxygène fourni à la pile provient avantageusement d'un réacteur 32 de décomposition de NaClO3 placé, au moyen d'une canalisation de transfert 35, en communication fluidique avec un réservoir de chlorate de sodium 31. La Figure 3 montre un exemple de moyen permettant d'effectuer l'approvisionnement de chlorate de sodium à partir du réservoir de chlorate de sodium 31 vers le réacteur 32. Dans cet exemple, une vis sans fin 50, disposée entre les deux éléments, est utilisée pour prélever le chlorate, sous forme de poudre, du réservoir de chlorate de sodium 31 et l'acheminer vers le réacteur 32. Dans une variante de réalisation non illustrée, le chlorate de sodium est acheminé au réacteur 32, disposé sensiblement sous le réservoir de chlorate de sodium 31, par gravité.

Le chlorate de sodium embarqué est décomposé par le réacteur installé dans le véhicule à mesure de la demande en oxygène venant de la pile à combustible. La décomposition du chlorate de sodium est gouvernée par la réaction suivante :

NaClO3 + « Chaleur » → NaCl + 3O2 ; cette réaction étant endothermique, elle consomme de l'énergie à bord du véhicule ; l'énergie nécessaire est prélevé à l'énergie électrique produite par la pile à combustible ; cependant, le rendement de cette réaction est très élevé et le bilan énergique global à bord de véhicule reste très intéressant, la part d'énergie prélevée à la pile à combustible pour l'alimenter ainsi en oxygène restant modeste.

L'oxygène issu de la réaction du réacteur 32 est acheminé à la pile à combustible 13 par une conduite à oxygène 36. Plutôt que de disperser le chlorure de sodium (NaCl) au fur et à mesure de sa production, il est stocké à bord du véhicule, dans un réservoir de stockage de chlorure de sodium 37, pour pouvoir le décharger, via un conduit de vidange 38, à la station servie et, dans une mise en oeuvre tout particulièrement avantageuse, le recyclage de ce produit est effectué sur place, comme cela est expliqué ci-dessous.

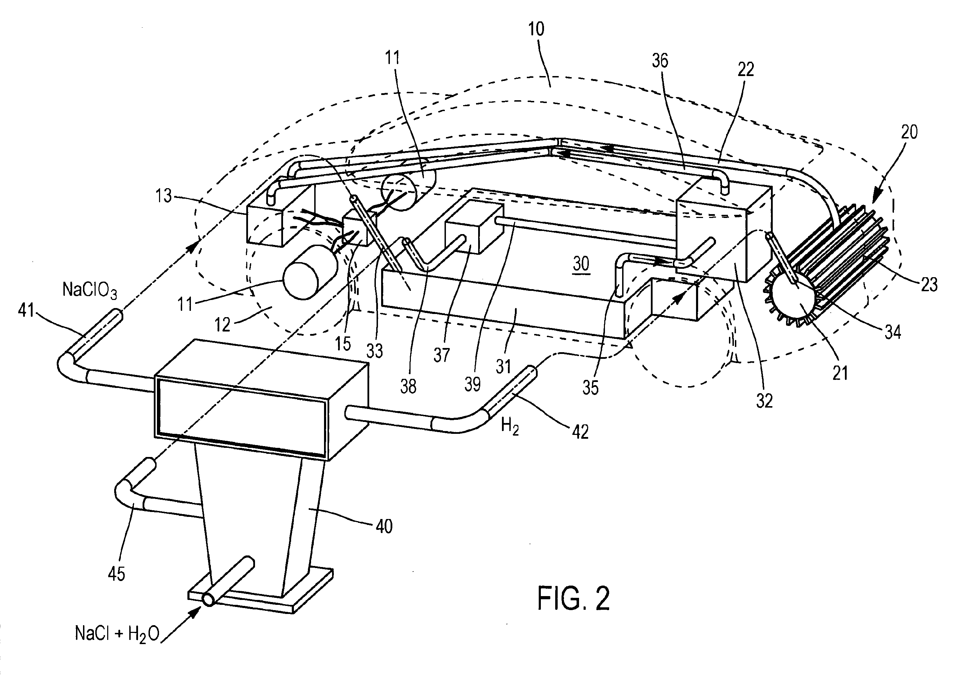

Les réservoirs de chlorate de sodium 31 et d'hydrogène 21 sont approvisionnés en chlorate de sodium d'une part et en hydrogène d'autre part lorsque le véhicule 10 est connecté à une station service 40 tel que présenté à la figure 2. La station service 40 est munie de deux emplacements 41 et 42 pour connexion aux conduits de remplissage 33 et 34 du véhicule. La station service 40 est aussi munie d'un branchement 45 pour connexion au conduit de vidange 38 du véhicule.

La station service 40 est prévue pour produire du chlorate de sodium et de l'hydrogène, à l'aide d'au moins un électrolyseur au NaCl. La station service doit par ailleurs être alimentée en eau, en sel et en énergie, pour permettre la réaction d'électrolyse. Ainsi, au niveau d'une station service, le sel (NaCl) mélangé à l'eau (H2O), au moins en partie récupéré par vidange des véhicules comme exposé ci-dessus, est électrolysé de telle façon à produire du chlorate de sodium (NaClO3) et de l'hydrogène (H2). La réaction chimique suivante l'illustre.

NaCl + 3H2O + 6e- → NaClO3 + 3H2

On remarque que cette réaction produit de l'hydrogène gazeux et du chlorate de sodium solide qui renferme trois atomes d'oxygène. Le chlorate de sodium peut être ainsi facilement stocké sans avoir recours à un réservoir sous pression avec toutes les contraintes liées à celui-ci. De plus le chlorate de sodium n'est pas dangereux. Par conséquent il peut être facilement transportable dans un véhicule sans danger. Des stockages intermédiaires pour l'hydrogène 43 et/ou pour le NaClO3 44 sont avantageusement prévus au niveau de la station service. La station service comporte également une cuve de stockage 450 pour le chlorure de sodium en provenance des véhicules par le branchement 45, le tout avec les moyens techniques appropriés pour assurer le transfert dudit chlorure de sodium (vis sans fin ou autre moyen adéquat). Ces réservoirs tampon et cuve de stockage permettent de produire l'hydrogène et le chlorate de sodium en toute liberté et avec plus de souplesse, sans contrainte d'approvisionnement en temps réel. Pour la station service, les contraintes de stockage de l'hydrogène sont moindres que sur un véhicule. Ainsi, le réservoir tampon d'hydrogène de la station service peut être soit un réservoir pressurisé, ou encore un réservoir avec des hydrures, similaire à celui d'un véhicule, mais de préférence avec un volume correspondant à une recharge de plusieurs véhicules. Des moyens d'acheminent de type connu, comme par exemple des tubes pourvus de vis sans fin, permettent de transvaser le NaClO3 du réservoir tampon vers le véhicule à alimenter.

Soulignons encore que, puisque selon le schéma proposé par l'invention, chaque véhicule produit du chlorure de sodium (NaCl) et que chaque station service consomme du chlorure de sodium, de préférence, chaque station service dispose d'un équipement (non représenté aux dessins) de collecte du chlorure de sodium stocké à bord du véhicule, afin de le recycler en station service pour la production du chlorate de sodium (NaClO3).

A bord des véhicules, afin de stocker l'hydrogène de façon optimale, des réservoirs comprenant des hydrures métalliques sont avantageusement prévus. Avec de tels réservoirs, le composé métallique agit comme une éponge à hydrogène. Il existe plusieurs métaux et alliages métalliques qui ont la propriété d'absorber l'hydrogène dans leur réseau cristallin. Lors du remplissage d'un réservoir, l'hydrogène moléculaire H2 diffusant dans le métal est stocké sous forme atomique H. La liaison moléculaire est affaiblie et il s'ensuit un dégagement de chaleur (réaction exothermique). Il est donc avantageux de prévoir un moyen de refroidissement permettant de refroidir le réservoir pendant le remplissage. Sur l'exemple de la figure 1, le réservoir d'hydrogène 21 est pourvu d'ailettes 23, qui permettent un refroidissement suffisant si le temps de charge n'est pas trop court. Pour un refroidissement plus efficace, un système de refroidissement à base de liquide peut être prévu.

Inversement, pour vider le réservoir, un apport énergétique est requis pour recréer la liaison moléculaire lorsque l'hydrogène atomique quitte l'hydrure. Pour pouvoir être effectuée, la réaction endothermique nécessite de puiser de l'énergie à l'environnement, de sorte que le réservoir se refroidit. De manière avantageuse, un apport en énergie permet d'optimiser l'expulsion de l'hydrogène. L'eau de refroidissement de la pile à combustible, une fois chargée en énergie calorifique, peut permettre de fournir une partie ou la totalité de l'énergie requise.

Les hydrures métalliques les plus connus sont : FeTiH1.7, LaNi5H6, MgH2, Mg2NiH2.

La masse d'hydrogène stockée dans le réservoir par unité de volume est sans doute l'un des avantages les plus importants d'une telle configuration de réservoir avec des hydrures métalliques. La masse volumique d'hydrogène stocké se situe entre 60 g/l et 130 g/l. A titre de comparaison, l'hydrogène comprimé à 350 bars dans un réservoir en composite (par exemple en fibres de carbone résine) a une densité de 25 g/l. Pour de l'hydrogène liquide, on obtient 71 g/l. Cela revient à dire que la technologie des hydrures métalliques permet de stocker beaucoup d'hydrogène dans un petit volume.

## Revendications

1. Ensemble de stations service et de véhicules, pour la production de et l'alimentation en hydrogène et oxygène desdits véhicules électriques, l'ensemble comportant :
• une pluralité de stations service (40) comprenant chacune au moins un électrolyseur au NaCl, prévues pour fournir à des véhicules susceptibles d'être reliés aux stations service une réserve d'hydrogène et une réserve de NaClO3 ;
• une pluralité de véhicules (10) connectables aux dites stations service pour recevoir les dites réserves d'hydrogène et de NaClO3 pour stockage dans les véhicules dans des réservoirs distincts (réservoir d'hydrogène 21, réservoir de chlorate de sodium 31) ;
• les véhicules (10) comportant des moyens (13) pour transformer l'hydrogène et le NaClO3 en énergie électrique pour alimenter au moins un équipement électrique du véhicule.

2. Ensemble selon la revendication 1, dans lequel l'équipement électrique est un moteur (11) servant à générer le déplacement du véhicule.

3. Ensemble selon l'une des revendications 1 ou 2, dans lequel les stations service (40) sont reliées à des sources d'alimentation électrique permettant de fournir l'énergie requise pour générer une réaction d'électrolyse.

4. Ensemble selon l'une des revendications 1 à 3, dans lequel la station service comprend :
- au moins un électrolyseur au NaCl, pour produire de l'hydrogène et du NaClO3 ;
- une alimentation en eau, pour la réaction d'électrolyse ;
- une alimentation en NaCl pour la réaction d'électrolyse;
- une alimentation en énergie électrique, pour la réaction d'électrolyse :
- une sortie de NaClO3 et une sortie de H2, issus de la réaction d'électrolyse, pour alimenter un véhicule connecté à ladite station service.

5. Ensemble selon la revendication 4, dans lequel la station service comprend par ailleurs des réservoirs de stockage intermédiaires (43, 44) pour le stockage d'hydrogène et de NaClO3 avant remplissage des réservoirs (réservoir d'hydrogène 21, réservoir de chlorate de sodium 31) des véhicules (10).

6. Ensemble selon la revendication 4 ou 5, dans lequel la station service comprend un équipement de collecte du chlorure de sodium stocké à bord du véhicule.

## Patentansprüche

1. Kombination aus Wartungsstationen und Fahrzeugen für die Herstellung von und die Versorgung mit Wasserstoff und Sauerstoff der elektrischen Fahrzeuge, wobei die Kombination Folgendes aufweist:
• eine Mehrzahl Wartungsstationen (40), die jeweils mindestens einen NaCl-Elektrolyseur aufweisen, die vorgesehen sind, um Fahrzeugen, die an die Wartungsstationen angeschlossen werden, einen Wasserstoffvorrat und einen NaClO₃-Vorrat zu liefern;
• eine Mehrzahl von Fahrzeugen (10), die an die Wartungsstationen angeschlossen werden können, um die Wasserstoff- und NaClO₃-Vorräte zum Lagern in den Fahrzeugen in getrennten Tanks (Wasserstofftank 21, Natriumchlorattank 31) zu empfangen;
• wobei die Fahrzeuge (10) Mittel (13) zum Umwandeln des Wasserstoffs und des NaClO₃ in elektrische Energie aufweisen, um mindestens eine elektrische Ausrüstung des Fahrzeugs zu versorgen.

2. Kombination nach Anspruch 1, bei der die elektrische Ausrüstung ein Motor (11) ist, der zum Erzeugen der Bewegung des Fahrzeugs dient.

3. Kombination nach einem der Ansprüche 1 oder 2, bei der die Wartungsstationen (40) mit elektrischen Versorgungsquellen verbunden sind, die es erlauben, die zum Erzeugen einer Elektrolysereaktion erforderliche Energie zu liefern.

4. Kombination nach einem der Ansprüche 1 bis 3, bei der die Wartungsstation Folgendes aufweist:
- mindestens einen NaCl-Elektrolyseur zum Erzeugen des Wasserstoffs und des NaClO₃;
- eine Wasserversorgung für die Elektrolysereaktion;
- eine NaCl-Versorgung für die Elektrolysereaktion;
- eine Stromversorgung für die Elektrolysereaktion;
- einen Ausgang des NaClO₃ und einen Ausgang des H₂, die aus der Elektrolysereaktion hervorgegangen sind, um ein Fahrzeug, das an die Wartungsstation angeschlossen ist, zu versorgen.

5. Kombination nach Anspruch 4, bei der die Wartungsstation außerdem Zwischenlagertanks (43, 44) für das Lagern von Wasserstoff und NaClO₃ vor dem Füllen der Tanks (Wasserstofftank 21, Natriumchlorattank 31) der Fahrzeuge (10) aufweist.

6. Kombination nach Anspruch 4 oder 5, bei der die Wartungsstation eine Sammelausrüstung des Natriumchlorids, das an Bord des Fahrzeugs gespeichert ist, aufweist.

## Claims

1. Set of stations and vehicules for producing and supplying hydrogen and oxygen for said electrical vehicles, said group comprising, first:
• a plurality of service stations (40) each comprising at least one NaCl electrolyser, which are provided in order to supply vehicles capable of being connected to the service stations with a supply of hydrogen and a supply of NaClO₃;
• a plurality of vehicles (10) which can be connected to the said service stations in order to receive the said supplies of hydrogen and NaClO₃ for storage in the vehicles in separate tanks (hydrogen tank 21, sodium chlorate tank 31);
• the vehicles (10) comprising means (13) for transforming the hydrogen and the NaClO₃ into electrical energy in order to supply at least one item of electrical equipment of the vehicle.

2. Set according to Claim 1, in which the item of electrical equipment is a motor (11) used to bring about the displacement of the vehicle.

3. Set according to either of Claims 1 and 2, in which the service stations (40) are connected to electrical supply sources which make it possible to provide the energy required to generate an electrolysis reaction.

4. Set according to one of Claims 1 to 3, in which the service station comprises:
- at least one NaCl electrolyser, for producing hydrogen and NaClO₃;
- a supply of water, for the electrolysis reaction;
- a supply of NaCl, for the electrolysis reaction;
- a supply of electrical energy, for the electrolysis reaction;
- an outlet for NaClO₃ and an outlet for H₂, which products result from the electrolysis reaction, in order to supply a vehicle connected to the said service station.

5. Set according to Claim 4, in which the service station furthermore comprises intermediate storage tanks (43, 44) for the storage of hydrogen and NaClO₃ before filling the tanks (hydrogen tank 21, sodium chlorate tank 31) of the vehicles (10).

6. Set according to Claim 4 or 5, in which the service station comprises an item of equipment for collecting the sodium chloride stored on board the vehicle.
